# EUROPEAN PATENT APPLICATION

(11) **EP 3 587 890 A1**
(43) Date of publication of application: **01.01.2020**
(21) Application number: 18813436.5
(22) Date of filing: 04.06.2018
(51) Int. Cl.: F16L 59/02, B64G 1/58

(54) **MULTILAYER HEAT-INSULATING MATERIAL**

(30) Priority: 09.06.2017 JP 2017114553
(71) Applicant: Mitsubishi Heavy Industries, Ltd., Chiyoda-ku Tokyo 100-8332 (JP)
(72) Inventor: MIYAGUCHI, Atsushi, Tokyo 108-8215 (JP); SASAKI, Takeo, Tokyo 108-8215 (JP); ISHIKAWA, Takafumi, Tokyo 1088215 (JP); HIRATA, Naoya, Tokyo 108-8215 (JP); HIROTSU, Satoshi, Tokyo 108-8215 (JP)
(74) Representative: Henkel & Partner mbB
(86) International application number: PCT/JP2018/021380
(87) International publication number: WO 2018/225688

(57) **Abstract**

Provided is a multilayer heat-insulating material which reduces a deterioration in heat-insulating performance at the periphery of a mounting means for mounting on a mounting subject and which facilitates deformation into a desired shape. This multilayer heat-insulating material comprises a heat-insulating member (2) in which heat-insulating sheets (2a) and spacers (2b) are laminated, an engagement sheet (3) provided adjacent to the heat-insulating member (2), heat-insulating member engagement fixtures (5) for penetrating through and engaging the heat-insulating member (2) and the engagement sheet (3), and a mounting member (4) that is provided on the engagement sheet (3) and that can be removably attached to a mounting subject (9). Engagement of the heat-insulating member engagement fixtures (5) is such that the layers of the heat-insulating member (2) do not adhere to each other.

## Description

### Technical Field

The present invention relates to a multilayer heat-insulating material used in a spacecraft navigating the outer space or a mounted device thereof.

### Background Art

In a spacecraft navigating the outer space, particularly, a rocket or an artificial satellite, or a mounted device thereof, thermal management is important. The spacecraft in the outer space is exposed to sunlight in vacuum, and accordingly, a temperature of the exposed portion by radiation from sunlight is increased. Meanwhile, the unexposed portion from the sunlight releases heat due to the radiation, and the temperature thereof is decreased. Thus, a countermeasure of preventing heat input and maintaining a temperature around the mounted device is necessary, so that the temperature around the mounted device becomes a suitable operation temperature for an operating time of a rocket or an artificial satellite.

As one of such countermeasure, use of a multilayer heat-insulating material that is also referred to as a "thermal blanket" is known.

The multilayer heat-insulating material is formed by stacking heat-insulating sheets having a low emissivity. In such a multilayer heat-insulating material, thermal conduction due to a contact between the heat-insulating sheets is prevented and a heat-insulating effect is increased, by inserting a spacer between layers of the heat-insulating sheets.

By covering the spacecraft or the mounted device on the spacecraft with such a multilayer heat-insulating material, the heat input due to the radiation from the outside of the spacecraft is prevented and the heat release due to the radiation from the inside of the spacecraft is prevented. Therefore, it is possible to maintain a temperature environment of the spacecraft in a suitable operation temperature range.

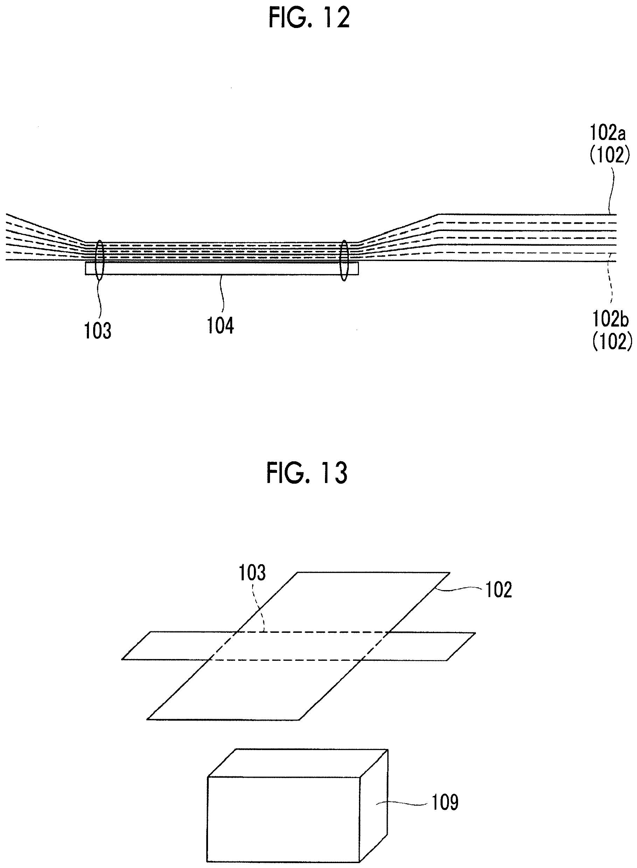

Such a multilayer heat-insulating material is mounted on a spacecraft main body so as to cover the vicinity of the spacecraft or the mounted device on the spacecraft, and it may be necessary to repeat detachment or adjustment of a position of the rigged multilayer heat-insulating material, for an adjustment operation of the spacecraft. It is possible to efficiently perform such an operation, by applying detachable mounting means to the multilayer heat-insulating material. For example, as shown in Fig. 12, a method of mounting a multilayer heat-insulating material (thermal blanket) 102 on an attachment surface using a Hook-and-Loop fastener 104 has been known.

PTL 1 shown below discloses a method of mounting a thermal blanket on an attachment surface using a Hook-and-Loop fastener (Velcro (registered trademark) tape).

### Citation List

### Patent Literature

[PTL 1] Japanese Unexamined Patent Application Publication No. H9-152088

### Summary of Invention

### Technical Problem

In the multilayer heat-insulating material, a case where the heat-insulating sheets are pressed against each other, causes a thermal leakage due to thermal conduction at that portion, and this is a reason for a deterioration in heat-insulating performance. The pressed portion is easily generated in the vicinity of the mounting means of the multilayer heat-insulating material. As shown in Fig. 12, in a case where the Hook-and-Loop fastener 104 of the related art is used as the mounting means, the multilayer heat-insulating material 102 is stitched to the Hook-and-Loop fastener 104 through a suture 103, and accordingly, a heat-insulating sheet 102a and a spacer 102b may be pressed against each other in the vicinity of the Hook-and-Loop fastener 104.

Meanwhile, the multilayer heat-insulating material 102 is stacked and formed by inserting the spacer 102b between the heat-insulating sheets 102a, otherwise, the heat-insulating sheets may be separated from each other, and accordingly, it is hard to handle the multilayer heat-insulating material. In a case of integrating the heat-insulating sheets by sewing, in order for ease of handling of this, the deformation to a desired shape is hardly performed. For example, in a case of covering the mounting device on a spacecraft, the deformation at a predetermined portion along a three-dimensional shape thereof may not be easily performed. In contrast, as shown in Fig. 13, it is easy to fold at a predetermined portion of a target 109 which is an attachment target, by sewing a line to be a crease in advance to set a suturing portion, but in this case, the heat-insulating sheet 102a and the spacer 102b may be pressed against each other in the suturing portion, and the heat-insulating performance may be deteriorated.

The invention is made in view of such circumstances, and an object of the invention is to provide a multilayer heat-insulating material that prevents a deterioration in heat-insulating performance in the vicinity of mounting means and makes deformation to a desired shape easy.

### Solution to Problem

In the invention, the following means are used for achieving the objects described above.

That is, there is provided a multilayer heat-insulating material according to one aspect of the invention, including: a heat-insulating member in which a heat-insulating sheet and a spacer are stacked; an engagement sheet provided adjacent to the heat-insulating member; a heat-insulating member engagement tool that penetrates the heat-insulating member and the engagement sheet and engages the heat-insulating member and the engagement sheet with each other; and a mounting member that is provided on the engagement sheet and is detachable from a mounting target, in which the heat-insulating member engagement tool performs the engagement so that each layer of the heat-insulating member is not adhered to each other.

The heat-insulating member and the engagement sheet are engaged so that the heat-insulating sheet and the spacer are not adhered to each other by the heat-insulating member engagement tool. The heat-insulating member and the engagement sheet are detachably attached to the mounting target by the mounting member provided on the engagement sheet. The mounting member is provided on the engagement sheet, and accordingly, is not directly attached to the heat-insulating member. The heat-insulating member engagement tool performs the engagement so that each layer of the heat-insulating member is not adhered to each other, and accordingly, it is possible to avoid occurrence of a deterioration in heat-insulating performance due to adhesion of each layer of the heat-insulating member.

In the multilayer heat-insulating material according to the one aspect of the invention, the heat-insulating member engagement tool includes a shank that penetrates the heat-insulating member and the engagement sheet in a stacking direction, and one pair of engagement portions that are provided on both ends of the shank, and a length of the shank is longer than a thickness, in a case where the heat-insulating member and the engagement sheet are in contact with each other, in a state where a load is not applied in the stacking direction.

By setting the length of the shank of the heat-insulating member engagement tool to be longer than the thickness, in a case where the heat-insulating member and the engagement sheet are in contact with each other, in a state where a load is not applied in the stacking direction, it is possible to perform the engagement so that each layer of the heat-insulating member is not adhered.

In the multilayer heat-insulating material according to the one aspect of the invention, the engagement sheet is a net-shaped or porous sheet.

By using a net-shaped or porous sheet as the engagement sheet, it is possible to prevent a weight increase while preventing thermal conduction.

In the multilayer heat-insulating material according to the one aspect of the invention, the engagement sheet includes a folding portion capable of forming a folding line along a predetermined direction.

The folding portion is provided on the engagement sheet, and the folding line is formed along the predetermined direction. Therefore, it is possible to mount the multilayer heat-insulating material in accordance with the shape of the mounting target.

In the multilayer heat-insulating material according to the one aspect of the invention, the engagement sheet includes a plurality of engagement sheet pieces, and a sheet connection portion that connects the engagement sheet pieces to each other, and the folding portion is formed by the sheet connection portion.

The engagement sheet is divided into the plurality of engagement sheet pieces, and the sheet connection portion that connects engagement sheet piece to each other is provided. The folding portion is formed by this sheet connection portion. As the sheet connection portion, for example, an adhesion tape or a resin film is used.

In the multilayer heat-insulating material according to the one aspect of the invention, the plurality of engagement sheet pieces have a shape corresponding to each surface of the mounting target.

By setting each engagement sheet piece to have a shape corresponding to each surface of the mounting target, it is possible to mount the multilayer heat-insulating material according to the shape of the mounting target.

### Advantageous Effects of Invention

It is possible to prevent a deterioration in heat-insulating performance in the vicinity of mounting means of the multilayer heat-insulating material and make deformation to a desired shape easy.

### Brief Description of Drawings

Fig. 1 is a perspective view showing a multilayer heat-insulating material according to a first embodiment of the invention.
Fig. 2 is a sectional view taken along a line A-A' of Fig. 1.
Fig. 3 is a view showing engagement of a laminate due to insertion of a heat-insulating material engagement tool in a manufacturing method of a multilayer heat-insulating material according to the first embodiment of the invention.
Fig. 4 is a view showing suturing of a peripheral edge portion of the heat-insulating member in the manufacturing method of a multilayer heat-insulating material according to the first embodiment of the invention.
Fig. 5 is a view showing engagement of the heat-insulating member due to insertion of a heat-insulating member peripheral edge portion engagement tool in the manufacturing method of a multilayer heat-insulating material according to the first embodiment of the invention.
Fig. 6 is a perspective view showing a multilayer heat-insulating material according to a second embodiment of the invention.
Fig. 7 is a sectional view showing the multilayer heat-insulating material according to the second embodiment of the invention, and is a sectional view taken along a line B-B' of Fig. 6.
Fig. 8 is a sectional view showing a state where the multilayer heat-insulating material according to the second embodiment of the invention is folded.
Fig. 9 is a sectional view showing the multilayer heat-insulating material according to a modification example of the second embodiment of the invention.
Fig. 10 is a sectional view showing a state where the multilayer heat-insulating material according to the modification example of the second embodiment of the invention is folded.
Fig. 11 is a perspective view showing shapes of an engagement sheet and a heat-insulating member according to the second embodiment of the invention.
Fig. 12 is a sectional view showing an example of a multilayer heat-insulating material of the related art.
Fig. 13 is a sectional view showing another example of the multilayer heat-insulating material of the related art.

### Description of Embodiments

### [First Embodiment]

Hereinafter, a multilayer heat-insulating material according to a first embodiment of the invention will be described with reference to the drawings.

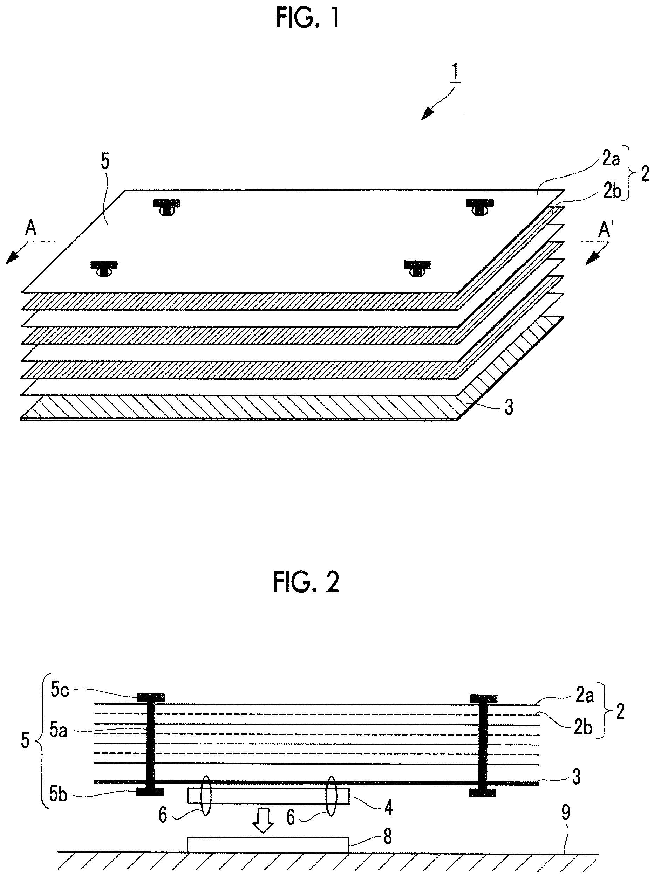

As shown in Figs. 1 and 2, a multilayer heat-insulating material 1 according to the embodiment includes a heat-insulating member 2, an engagement sheet 3 provided adjacent to the heat-insulating member, a mounting member 4 fastened to the engagement sheet 3, and a heat-insulating member engagement tool 5.

The heat-insulating member 2 is formed by stacking 10 to 20 layers of the heat-insulating sheet 2a with spacers 2b interposed therebetween. As an example of the heat-insulating sheet, a film having a low emissivity, for example, or a layer obtained by performing vapor deposition of metal on a resin film having a thickness of 10 to 20 micrometers is used. As a suitable example, a layer obtained by performing vapor deposition of metal (Al, Ag, or Au) on a Kapton film having a thickness of 10 to 20 micrometers is used. The emissivity of light or electromagnetic waves is improved by performing the vapor deposition of metal, and therefore, in a case where the heat-insulating member is mounted on a mounting target 9 (spacecraft such as a rocket or an artificial satellite or a device mounted on a spacecraft) as the multilayer heat-insulating material, heat input due to radiation from the outside is prevented and heat release to the outside due to the radiation from the inside is prevented. As an example of the spacer 2b, a net-shaped member or a porous sheet-shaped member formed of a heat-insulating material is used, and particularly, a member formed of a material having a lower thermal conductivity than that of a film used in the heat-insulating sheet 2a is preferable.

The engagement sheet 3 is fastened by the mounting member 4 and a suture 6. The mounting member 4 is used in a case of mounting the multilayer heat-insulating material 1 on the mounting target 9. For example, a mounting member 8 to be paired is provided on a surface of the mounting target 9, and the mounting member 4 is mounted on the mounting member 8. The mounting member 4 is not fastened to the heat-insulating member 2. The mounting member 4 is desirably repeatedly detachable mounting means, and is particularly desirable to be detached by an operation from the outside of the multilayer heat-insulating material 1. A Hook-and-Loop fastener is used as an example of the mounting member 4, and a fastener such as a snap or a hook can also be used. The engagement sheet 3 is repeatedly detachable from a spacecraft or a device mounted on a spacecraft by the mounting member 4. The engagement sheet 3 has a strength so that the engagement sheet is not damaged, even in a case where the detachment is repeated. As a suitable example of the engagement sheet 3, a material obtained by proceeding styrene, polyethylene, polypropylene, polytetrafluoroethylene, or a foaming body thereof in a sheet shape is used. As the other suitable example of the engagement sheet 3, a net-shaped sheet or a porous sheet formed of styrene, polyethylene, polypropylene, or polytetrafluoroethylene is used.

The heat-insulating member engagement tool 5 is dispersively provided in an in-plane direction of a laminate formed of the heat-insulating member 2 and the engagement sheet 3. The heat-insulating member engagement tool 5 includes a shank 5a, and a pair of engagement portions 5b and 5c provided on both ends of the shank 5a. The engagement portion 5b is provided on the outer side of the engagement sheet 3 of the laminate, and the engagement portion 5c is provided on the outer side of the heat-insulating member 2 of the laminate. As the heat-insulating member engagement tool 5, for example, a tag pin attached with a tag gun is used. As a material of the heat-insulating member engagement tool 5, nylon is used, for example.

The shank 5a is provided to penetrate each layer (stacked heat-insulating sheets 2a and spacers 2b) of the heat-insulating members 2 and the engagement sheet 3. The heat-insulating member engagement tool 5 is formed so that a length of the shank 5a is equal to or greater than a sum of a thickness of the stacked heat-insulating members 2 and a thickness of the engagement sheet 3. Accordingly, an inter-layer distance of each layer of the heat-insulating member 2 is not greatly narrowed by the heat-insulating member engagement tool 5, and the layers are not adhered to each other. Accordingly, a deterioration in heat-insulating performance due to the pressing of each layer of the heat-insulating member does not occur. The sum of the thickness of the stacked heat-insulating members 2 and the thickness of the engagement sheet 3 means a thickness, in a case where the heat-insulating members are in contact with each other, in a state where a load is not applied in the stacking direction thereof, that is, a thickness in a state where the heat-insulating members 2 and the engagement sheet 3 are stacked by dead load.

The shank 5a does not bind each layer of the heat-insulating member 2 and the engagement sheet 3 in the stacking direction in the penetration portion of the laminate, and a relative position of the shank 5a, and each layer of the heat-insulating member 2 and the engagement sheet 3 can be changed in an extending direction of the shank 5a.

The engagement portions 5b and 5c are respectively formed so that a portion having a diameter longer than a diameter of a hole formed at the penetration portion of the laminate penetrated by the shank 5a is provided in a direction orthogonal to the shank 5a. For example, the engagement portions 5b and 5c respectively have a rod shape or a plate shape, are connected to the shank 5a at each center in a longitudinal direction, and extends longer than a diameter of the hole in a direction orthogonal to the shank 5a from the connection portion. Therefore, the heat-insulating member engagement tool 5 is prevented from falling from the laminate. The engagement portions 5b and 5c are respectively formed to have a material and a shape so that an engagement state can be maintained, even in a case where a force is applied to the heat-insulating member engagement tool 5, at the time of attachment or detachment of the multilayer heat-insulating material 1.

The heat-insulating member engagement tool 5 is dispersively provided in a plane direction of the laminate. For example, as shown in Fig. 1, the heat-insulating member engagement tool is dispersively provided at four corners of the laminate.

As described above, the heat-insulating member 2 is engaged to the engagement sheet 3 by the heat-insulating member engagement tool 5, and the engagement sheet 3 is mounted on the mounting target 9 by the mounting member 4, and accordingly, it is possible to prevent reduction of heat-insulating performance by pressing of each layer of the heat-insulating member 2.

Next, a manufacturing method of a multilayer heat-insulating material according to the embodiment will be described.

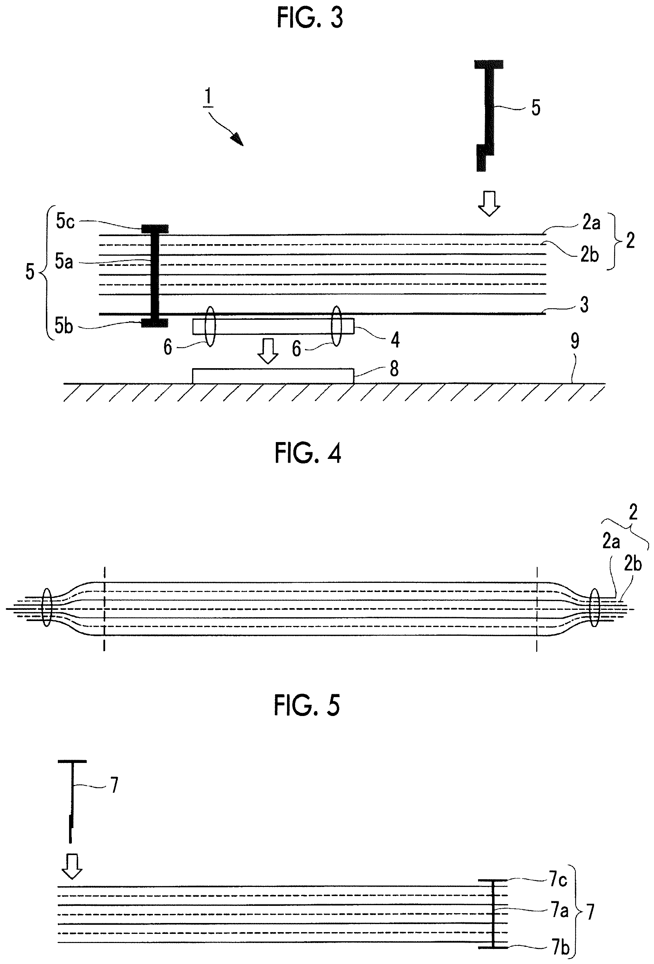

First, as shown in Fig. 3, the predetermined number of sheets of the heat-insulating sheets 2a are stacked by inserting spacers 2b between the heat-insulating sheets 2a, to form the heat-insulating member 2. The heat-insulating sheet 2a is formed by molding a film obtained by performing vapor deposition of metal on a resin film such as Kapton, for example, in a predetermined shape. (Step 1-1)

Next, as shown in Fig. 3, the engagement sheet 3 is installed adjacent to the heat-insulating member 2, and a laminate is formed. For example, the heat-insulating member 2 is loaded on the engagement sheet 3, and a surface on the lower side of the heat-insulating member 2 and an upper surface of the engagement sheet 3 are adjacent to each other. The mounting member 4 is fastened to the engagement sheet 3 by sewing or the like. The mounting member 4 is fastened to a side of the engagement sheet 3 opposite to a surface adjacent to the heat-insulating member 2. (Step 1-2)

Next, as shown in Fig. 3, the heat-insulating member engagement tool 5 is inserted from a surface of the upper side of the heat-insulating member 2 of the laminate, so as to penetrate each layer of the heat-insulating member 2 and the engagement sheet 3. For example, a tag pin is used as the heat-insulating member engagement tool 5, and the tag pin is inserted from the surface of the upper side of the heat-insulating member 2 by using a tag gun. At this time, the heat-insulating member engagement tool may be inserted while forming a through-hole to the heat-insulating member 2 and the engagement sheet 3, or, in a case where a hole is formed at least a part of the heat-insulating member 2 and the engagement sheet 3 in advance, the heat-insulating member engagement tool may be inserted so as to penetrate this hole. (Step 1-3)

The inserted heat-insulating member engagement tool 5 penetrates the heat-insulating member 2 and the engagement sheet 3, and the engagement portion 5b on a lower side of the engagement sheet 3 is deformed in a shape extending longer than a diameter of the hole in a direction orthogonal to the shank 5a from the connection portion on the connection portion with the shank 5a. Accordingly, the heat-insulating member engagement tool 5 is prevented from falling from the laminate, and the heat-insulating member 2 and the engagement sheet 3 are engaged with each other. For example, in a case of using the heat-insulating member engagement tool 5 including the engagement portion 5b formed of a material having elasticity and orthogonal to the shank 5a, the engagement portion 5b may be fixed in an overlapped state so as to substantially parallel to the shank 5a, the heat-insulating member engagement tool may be inserted and penetrate so as to penetrate the heat-insulating members 2 and the engagement sheet 3, the fixed state may be released on the lower portion of the engagement sheet 3, the shape may be recovered by the elasticity of the heat-insulating member engagement tool 5, and the heat-insulating members 2 and the engagement sheet 3 may be engaged. In addition, by forming the shank 5a in a smooth surface shape in the extending direction of the shank, each layer of the laminate can be slidably move along the shank 5a and can be easily deformed in a desired shape.

### (Step 1-4)

Step 1-3 and Step 1-4 are repeated, the predetermined number of heat-insulating member engagement tools 5 are dispersively provided in a plane direction of the laminate, and accordingly, the heat-insulating member 2 is engaged with the engagement sheet 3 and the multilayer heat-insulating material 1 is integrated. For example, in a case where the heat-insulating member 2 has a shape of polygon in a plan view, one or more heat-insulating member engagement tools 5 may be dispersively provided in the vicinity of each apex thereof or dispersively provided on a peripheral edge portion along a part or the entirety of each side of the polygon.

As shown in Fig. 2, the integrated multilayer heat-insulating material 1 is mounted on the mounting target 9 through the mounting member 4 fastened to the engagement sheet 3 and the mounting member 8. The positions and the number of mounting member 4 and the mounting member 8 are suitably selected in accordance with the shape of the mounting target 9. For example, in a case where the mounting target is set as a tank for a rocket, the pair of the plurality of mounting members 4 and the mounting members 8 may be disposed, by considering the necessary shape of the multilayer heat-insulating material 1 and a direction of stress applied during the flight.

As shown in Fig. 4, Step 1-1 may further include a step of forming the heat-insulating member 2 by stacking the heat-insulating sheets 2a and the spacers 2b and integrating by sewing the peripheral edge portions thereof (Step 1-1'). Accordingly, it is possible to improve handleability during the manufacturing of the multilayer heat-insulating material 1. In this step, it is suitable that the heat-insulating member 2 is formed to be greater than the engagement sheet 3, and the peripheral edge portions to be sewn are extended to the outer side of the engagement sheet 3 in the plane direction. In this case, a portion of the heat-insulating member 2 in contact with the engagement sheet 3 does not have a sewn portion, and a deterioration in heat-insulating performance due to contact of each layer of the heat-insulating member can be locally limited. Alternatively, after completing the rigging, a portion extended from the engaged sheet may be cut for each sewn portion. In this case, a contact state of each layer of the heat-insulating member generated by the sewn peripheral edge portion is alleviated.

As another modification example of Step 1-1, as shown in Fig. 5, a step of forming the heat-insulating member 2 by stacking the heat-insulating sheets 2a and the spacers 2b, and dispersively providing a plurality of heat-insulating member peripheral edge portion engagement tools 7 on the peripheral edge portions, for integrating may be further provided (Step 1-1''). The heat-insulating member peripheral edge portion engagement tool 7 is provided to penetrate the heat-insulating member 2 and formed to include a heat-insulating member peripheral edge portion engagement tool shank 7a having a length equal to or greater than a thickness of the stacked and formed heat-insulating members 2, and one pair of heat-insulating member peripheral edge portion engagement tool engagement portions 7b and 7c provided on both ends of the heat-insulating member peripheral edge portion engagement tool shank 7a. Specifically, the heat-insulating member peripheral edge portion engagement tool 7 is inserted from a surface of the upper side of the heat-insulating member 2 so as to penetrate each layer of the heat-insulating member 2, and the heat-insulating member peripheral edge portion engagement tool engagement portion 7b on a lower side of the heat-insulating member 2 is deformed in a shape extending longer than a diameter of the hole in a direction orthogonal to the heat-insulating member peripheral edge portion engagement tool shank 7a from the connection portion on the connection portion with the heat-insulating member peripheral edge portion engagement tool shank 7b. This is repeated, and the predetermined number of heat-insulating member peripheral edge portion engagement tools 7 are dispersively provided in the plane direction of the heat-insulating member 2, for integrating the heat-insulating members 2. Since the length of the heat-insulating member peripheral edge portion engagement tool shank 7a is longer than the thickness of the stacked and formed heat-insulating members 2, an inter-layer distance of the heat-insulating member 2 is not greatly narrowed, even in a case where the heat-insulating members 2 are integrated by the heat-insulating member peripheral edge portion engagement tools 7. Therefore, it is possible to improve the handleability, without deteriorating the heat-insulating performance due to the adhesion of each layer of the heat-insulating members 2. As the heat-insulating member peripheral edge portion engagement tool 7, the same tool as the heat-insulating member engagement tool 5 described above is used, and the heat-insulating member peripheral edge portion engagement tool may be inserted into the heat-insulating members 2 by the same means as the heat-insulating member engagement tool 5.

### [Second Embodiment]

Hereinafter, a multilayer heat-insulating material according to a second embodiment of the invention will be described with reference to the drawings.

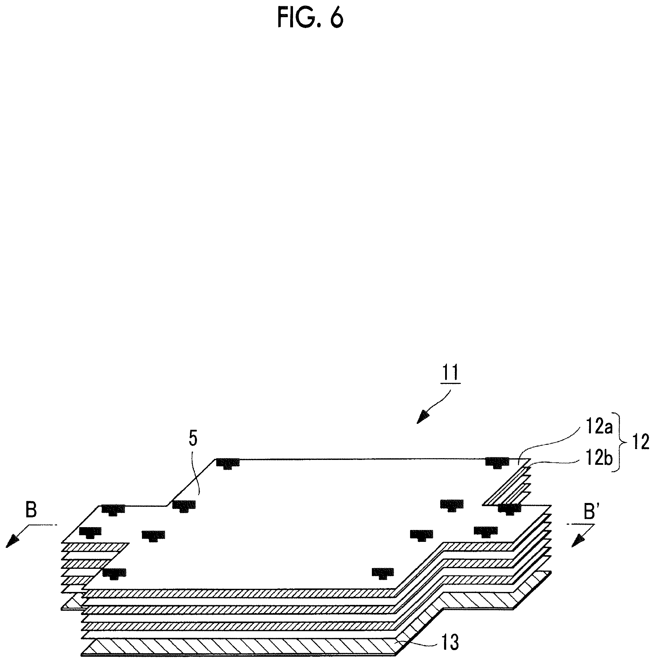

A multilayer heat-insulating material 11 according to the embodiment is shown in Figs. 6 to 11. In Figs. 6 to 11, the same reference numerals as in Fig. 1 or 2 are used for the same constituent components as in Fig. 1 or 2, and the description thereof is omitted.

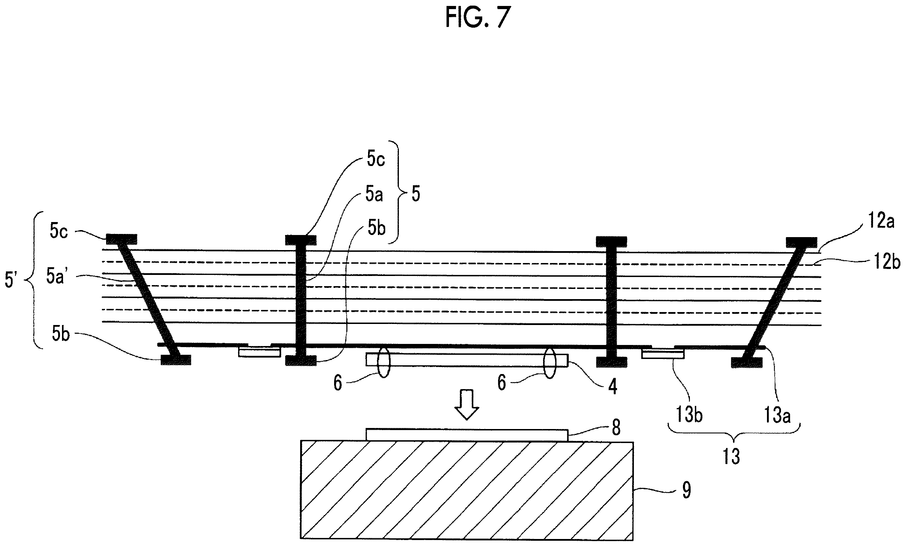

As shown in Figs. 6 and 7, the multilayer heat-insulating material 11 according to the embodiment includes heat-insulating members 12, an engagement sheet 13 provided adjacent to the heat-insulating member 12, the mounting member 4 fastened to the engagement sheet 13, and the heat-insulating member engagement tool 5. The laminate formed of the heat-insulating members 12 and the engagement sheet 13 is integrated by the heat-insulating member engagement tool 5.

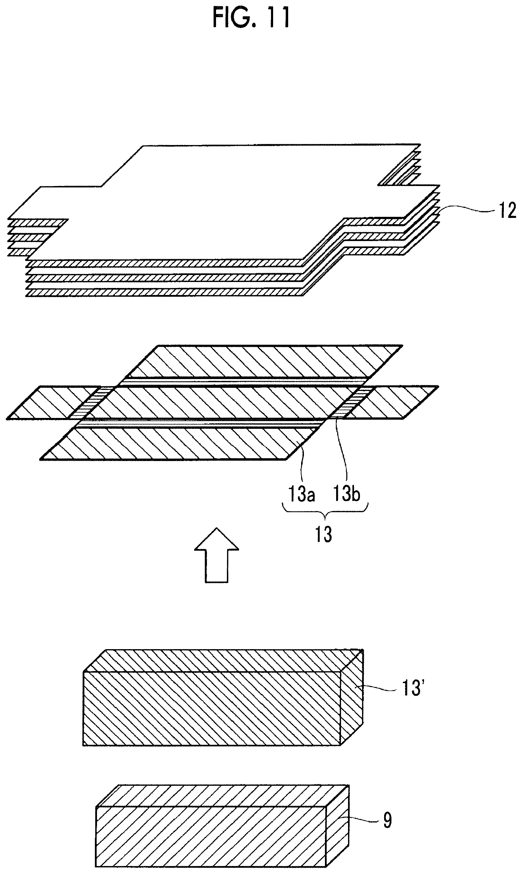

The engagement sheet 13 is formed of a plurality of engagement sheet pieces 13a, and flexible sheet connection portion (folding portion) 13b connecting the plurality of engagement sheet pieces to each other. As shown in Fig. 11, the engagement sheet 13 has a shape of at least a part of surfaces configuring a development view developing a predetermined three-dimensional shape 13' surrounding the mounting target 9. That is, each engagement sheet piece 13a has a shape corresponding to each surface of the mounting target 9. Specifically, the engagement sheet 13 is folded by the sheet connection portion 13b to have a shape so as to form the predetermined three-dimensional shape 13' surrounding the mounting target 9. The engagement sheet 13 shown in Fig. 11 does not include a portion corresponding to a bottom surface and has a shape so as to cover the mounting target 9 from the top, but may include a bottom surface and have a shape so as to cover the entirety of the mounting target 9.

The engagement sheet piece 13a is a sheet piece on a flat plate formed of a material such as styrene, polyolefin, polypropylene, or polytetrafluoroethylene, and having a rigidity. In a case of deforming the multilayer heat-insulating material 11 in accordance with the shape of the mounting target 9, it is desirable to determine a thickness or a material so that the engagement sheet 13 maintains the shape and engages the engagement portions 5b and 5c of the heat-insulating member engagement tool 5 without being broken. Each of the engagement sheet pieces 13a has a shape of at least one of surfaces configuring a development view developing the predetermined three-dimensional shape 13' surrounding the mounting target 9. The thickness or the material of the engagement sheet 13 may be locally changed.

The sheet connection portion 13b is a flexible material connecting a peripheral edge portion and a peripheral edge portion of the engagement sheet piece 13a and the engagement sheet piece 13a is connected so as to change a relative position. For example, as an example of the sheet connection portion 13b, an adhesion tape or a resin film attached to the peripheral edge portion of the engagement sheet piece 13a is used. The sheet connection portion 13b is formed to be more flexible than the engagement sheet piece 13a having a rigidity. Therefore, in a case of deforming the multilayer heat-insulating material 11 along the mounting target 9, the laminate formed of the heat-insulating member 12 and the engagement sheet 13 can be easily folded at a position of the sheet connection portion 13b. The sheet connection portion 13b preferably has a structure in which the sheet connection portion 13b is mounted on the inner side of the engagement sheet 13 in a folding direction.

The heat-insulting member 12 is formed by stacking 10 to 20 layers of the heat-insulating sheet 12a with spacers 12b interposed therebetween, in the same manner as in the heat-insulting member 2 of the first embodiment. The heat-insulating member 12 is greater than the engagement sheet 13 in a plan view, and has a shape of covering the entirety of the engagement sheet in a state where the engagement sheet 13 is folded to be inner side. For example, as shown in Fig. 7, the heat-insulating member 12 has the substantially the same shape as that of the engagement sheet 13 and has a shape in which the peripheral edge portion thereof is extended to the outer side of the engagement sheet in the plane direction. By setting such a shape, in a case of deforming the multilayer heat-insulating material 11 in accordance with the shape of the mounting target 9 by folding by the sheet connection portion 13b, it is possible to cover the mounting target with the heat-insulating member 12, without generating the gap and causing a deterioration in heat-insulating performance due to the pressing of each layer of the heat-insulating member 12. The peripheral edge portions of the heat-insulating members 12 may be butt or may be overlapped.

The heat-insulating member engagement tool 5 is dispersively provided in the in-plane direction of the laminate formed of the heat-insulating member 12 and the engagement sheet 13. The shank 5a of the heat-insulating member engagement tool 5 is provided to penetrate each layer (stacked heat-insulating sheets 12a and spacers 12b) of the heat-insulating members 12 and the engagement sheet 13. The heat-insulating member engagement tool 5 is formed so that a length of the shank 5a is equal to or greater than a sum of a thickness of the stacked heat-insulating members 12 and a thickness of the engagement sheet 13. Accordingly, an inter-layer distance of each layer of the heat-insulating member 2 is not greatly narrowed by the heat-insulating member engagement tool 5, and accordingly, a deterioration in heat-insulating performance due to the pressing of each layer of the heat-insulating member does not occur. The sum of the thickness of the stacked heat-insulating members 12 and the thickness of the engagement sheet 13 means a thickness, in a case where the heat-insulating members are in contact with each other, in a state where a load is not applied in the stacking direction thereof, that is, a thickness in a state where the heat-insulating members 12 and the engagement sheet 13 are stacked by dead load.

In a case where the thickness of the engagement sheet 13 is locally different, a length of the shank 5a may be locally changed in advance according thereto. The shank 5a does not bind each layer of the heat-insulating member 12 and the engagement sheet 13 in the stacking direction in the penetration portion of the laminate, and a relative position of the shank 5a, and each layer of the heat-insulating member 12 and the engagement sheet 13 can be changed in an extending direction of the shank 5a. The engagement portions 5b and 5c are respectively formed so that a portion having a diameter longer than a diameter of a hole formed at the penetration portion of the laminate penetrated by the shank 5a is provided in a direction orthogonal to the shank 5a. For example, the engagement portions 5b and 5c respectively have a rod shape or a plate shape, are connected to the shank 5a at each center in a longitudinal direction, and extends longer than a diameter of the hole in a direction orthogonal to the shank 5a from the connection portion. The engagement portions 5b and 5c are respectively formed to have a material and a shape so that an engagement state can be maintained, even in a case where a force is applied to the heat-insulating member engagement tool 5, at the time of attachment or detachment of the multilayer heat-insulating material 11.

It is suitable that the heat-insulating member engagement tool 5 is dispersively provided in a plane direction so as to penetrate the peripheral edge portion of the engagement sheet piece 13a. The position for providing the heat-insulating member engagement tool 5 is determined by assuming a state where the engagement sheet 13 is folded by the sheet connection portion 13b to form the predetermined three-dimensional shape 13' surrounding the mounting target 9. For example, as shown in Figs. 6 and 7, the heat-insulating member engagement tool 5 is provided on four corners of the engagement sheet piece 13a corresponding to the top board of the three-dimensional shape 13'. The engagement sheet piece 13a corresponding to the top board of the three-dimensional shape 13' is positioned at the center, in a case of folding the engagement sheet 13 at the sheet connection portion 13b, and the position change during the folding is small. Accordingly, the engagement sheet piece corresponds to a portion with a small change in relative position between each layer of the heat-insulating member 12 and the engagement sheet 13, in a case of folding the multilayer heat-insulating material 11. Accordingly, by first providing the heat-insulating member engagement tool 5 at four corners of the engagement sheet piece 13a corresponding to the top board of the three-dimensional shape 13' to fix the relative position with the engagement sheet 13, it is possible to efficiently engage the heat-insulating member 12 with the engagement sheet 13. In addition, the heat-insulating member engagement tool 5 is provided on the peripheral edge portion (peripheral portion on a side opposite to the sheet connection portion 13b) of each engagement sheet piece 13a connected at the peripheral edge portion. Therefore, it is possible to integrate the multilayer heat-insulating material, regardless of the change of the relative position during the folding.

Next, the manufacturing method of the multilayer heat-insulating material according to the embodiment will be described.

First, the predetermined three-dimensional shape 13' surrounding the mounting target 9 is assumed and a development view developing this three-dimensional shape 13' is drawn. Each engagement sheet piece 13a is formed in a shape shown in Fig. 11, based on the shape of each surface configuring this development view. The thickness or the material of each engagement sheet piece 13a is selected so that the engagement sheet piece 13a maintains the shape and engages the engagement portions of the heat-insulating member engagement tool 5 without being broken, in a case of deforming the multilayer heat-insulating material 11 in accordance with the shape of the mounting target 9. The peripheral portion of each of the engagement sheet pieces 13a is connected at the sheet connection portion 13b so as to form the development view (see Fig. 7), and the engagement sheet 13 is formed. For example, in a case of using an adhesion tape or a resin film as the sheet connection portion 13b, the sheet connection portion is attached to the peripheral edge portion of the engagement sheet piece 13a from a side of the inner side, in a case of folding the engagement sheet 13. The mounting member 4 is fastened to the engagement sheet 13 by sewing or the like. As a suitable example, the mounting member 4 is fastened to the engagement sheet piece 13a positioned at the center, in a case of folding the engagement sheet 13. In addition, for mounting of the multilayer heat-insulating material, the plurality of mounting members 4 may be mounted on the plurality of engagement sheet pieces 13a. (Step 2-1)

Next, as shown in Fig. 7, in the same manner as in the manufacturing method of the multilayer heat-insulating material 1 according to the first embodiment, the predetermined number of sheets of the heat-insulating sheets 12a are stacked by inserting spacers 12b between the heat-insulating sheets 12a, to form the heat-insulating member 12. The heat-insulating sheet 12a is formed by molding a film obtained by performing vapor deposition of metal on a resin film such as Kapton, for example, in a predetermined shape. The shape of the heat0insulating sheet 12a is the substantially the same shape as that of the engagement sheet 13 and a shape in which the peripheral edge portion thereof is extended to the outer side of the engagement sheet in the plane direction. (Step 2-2)

Next, as shown in Fig. 7, the engagement sheet 13 is installed adjacent to the heat-insulating member 12, and a laminate is formed. For example, the heat-insulating member 12 is loaded on the engagement sheet 13, and a surface on the lower side of the heat-insulating member 12 and an upper surface of the engagement sheet 13 are adjacent to each other. The mounting member 4 is disposed on a side of the engagement sheet 13 opposite to a surface adjacent to the heat-insulating member 12. (Step 2-3)

Next, as shown in Fig. 7, in the same manner as in the manufacturing method of the multilayer heat-insulating material 1 according to the first embodiment, the heat-insulating member engagement tool 5 is inserted from a surface of the upper side of the heat-insulating member 12 of the laminate, so as to penetrate each layer of the heat-insulating member 12 and the engagement sheet 13. For example, a tag pin is used as the heat-insulating member engagement tool 5, and the tag pin is inserted from the surface of the upper side of the heat-insulating member 12 by using a tag gun. At this time, the heat-insulating member engagement tool may be inserted while forming a through-hole to the heat-insulating member 12 and the engagement sheet 13, or, in a case where a hole is formed at least a part of the heat-insulating member 12 and the engagement sheet 13 in advance, the heat-insulating member engagement tool may be inserted so as to penetrate this hole. (Step 2-4)

The inserted heat-insulating member engagement tool 5 penetrates the heat-insulating member 12 and the engagement sheet 13, and the engagement portion 5b on a lower side of the engagement sheet 13 is deformed in a shape extending longer than a diameter of the hole in a direction orthogonal to the shank 5a from the connection portion on the connection portion with the shank 5a. Accordingly, the heat-insulating member engagement tool 5 is prevented from falling from the laminate, and the heat-insulating member 12 and the engagement sheet 13 are engaged with each other. By forming the shank 5a in a smooth surface shape in the extending direction of the shank, each layer of the laminate can be slidably move along the shank 5a and can be easily deformed in a desired shape. (Step 2-5)

Step 2-4 and Step 2-5 are repeated, the predetermined number of heat-insulating member engagement tools 5 are dispersively provided in a plane direction of the laminate, and accordingly, the heat-insulating member 12 is engaged with the engagement sheet 13 and the multilayer heat-insulating material 11 is integrated. As a suitable example, first, the heat-insulating member engagement tool 5 is provided on four corners of the engagement sheet piece 13a corresponding to the top board of the three-dimensional shape 13', and the heat-insulating member engagement tool 5 is also provided on the peripheral edge portion (peripheral portion on a side opposite to the sheet connection portion 13b) of each engagement sheet piece 13a connected at the peripheral edge portion. Therefore, it is possible to integrate the multilayer heat-insulating material, regardless of the change of the relative position during the folding.

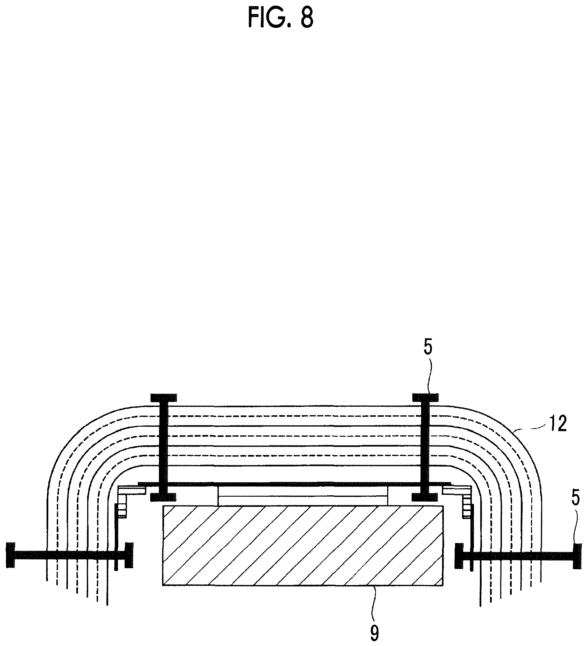

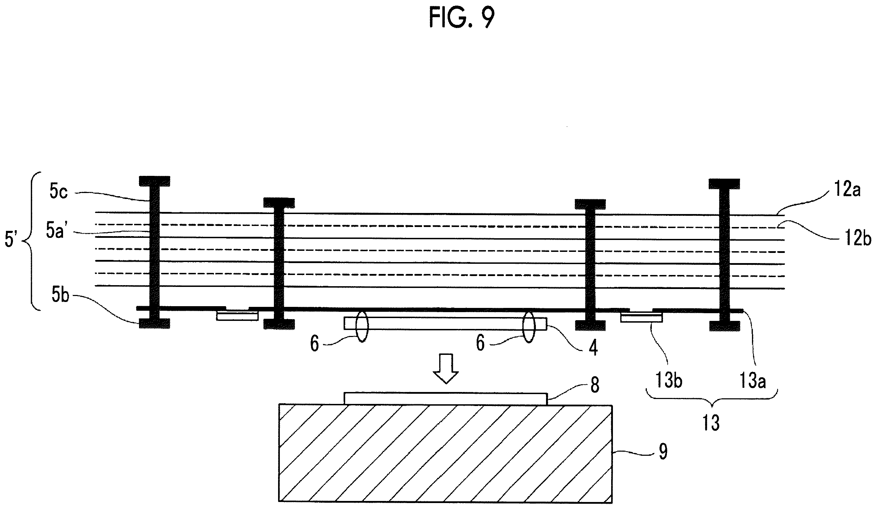

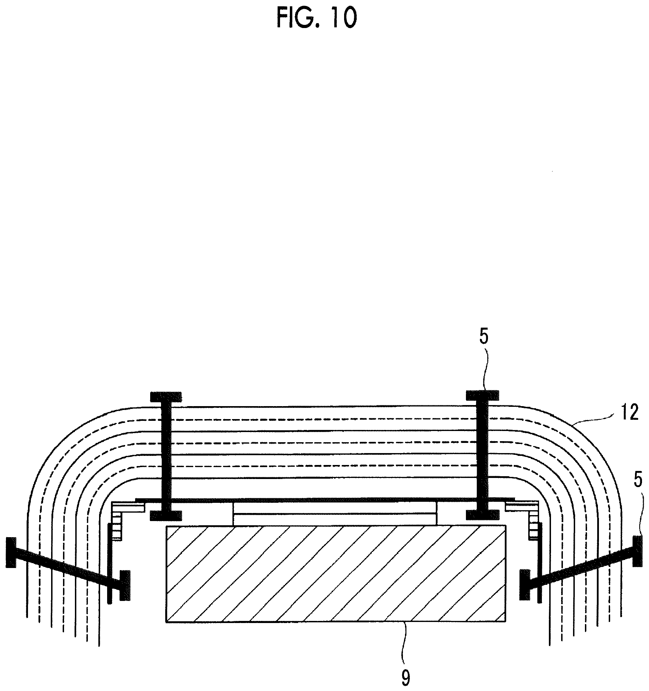

In a case where the engagement sheet 13 is folded to have a shape of a protrusion to the outer side in the inner side, the position for forming the heat-insulating member engagement tool 5 is determined, by assuming that the layer of the heat-insulating member 12 on the outer side has a radius of curvature greater than that of the layer on the inner side. As a suitable example, as shown in Fig. 7, the heat-insulating member engagement tool 5 is provided on four corners of the engagement sheet piece 13a corresponding to the top board of the three-dimensional shape 13' in a substantially vertical direction (stacking direction), and a heat-insulating member engagement tool 5' having a longer shank 5a' is provided obliquely to the stacking direction in the portion extending from a predetermined folding position, so that the layer on the outer side penetrates the position moved forward (position separated) from the predetermined folding position. As described above, by adjusting the position for providing the heat-insulating member engagement tool 5', as shown in Fig. 8, even in a case where the multilayer heat-insulating material 11 is deformed in accordance with the shape of the mounting target 9, the layers of the heat-insulating member 12 are not pressed. As shown in Fig. 9, the length of the shank 5a' of the heat-insulating member engagement tool 5' is sufficiently ensured in advance, and the heat-insulating member engagement tool 5' may be substantially vertically provided in the portion extended from the predetermined folding position. In this case, as shown in Fig. 10, in a case where the multilayer heat-insulating material 11 is deformed in accordance with the shape of the mounting target 9, the heat-insulating member engagement tool 5' has a shape penetrating the heat-insulating member 12 obliquely to the stacking direction.

The integrated multilayer heat-insulating material 11 is mounted on the mounting target 9 by connecting the mounting member 4 fastened to the engagement sheet 13 and the mounting member 8 on the facing side. At the time of the mounting, the engagement sheet 13 is folded so as to form the predetermined three-dimensional shape 13', and accordingly, the multilayer heat-insulating material 11 is deformed in accordance with the shape of the mounting target 9. The positions and the number of mounting member 4 and the mounting member 8 are suitably selected in accordance with the shape of the mounting target 9.

In the same manner as in the manufacturing method of the multilayer heat-insulating material 1 according to the first embodiment, Step 2-2 may further include a step of forming the heat-insulating member 12 by stacking the heat-insulating sheets 12a and the spacers 12b and integrating by sewing the peripheral edge portions thereof (Step 2-2'). In this step, it is suitable that the heat-insulating member 12 is formed to be greater than the engagement sheet 13, and the peripheral edge portions to be sewn are extended to the outer side of the engagement sheet 13 in the plane direction. In addition, after completing the rigging, a portion extended from the engaged sheet may be cut for each sewn portion. In this case, a contact state of each layer of the heat-insulating member generated by the sewn peripheral edge portion is alleviated.

In the same manner as in the manufacturing method of the multilayer heat-insulating material 1 according to the first embodiment, Step 2-2 may further include a step of forming the heat-insulating member 12 by stacking the heat-insulating sheets 12a and the spacers 12b, and dispersively providing a plurality of heat-insulating member peripheral edge portion engagement tools 7 on the peripheral edge portions, for integrating (Step 2-2''). The heat-insulating member peripheral edge portion engagement tool 7 is inserted from a surface of the upper side of the heat-insulating member 12 so as to penetrate each layer of the heat-insulating member 12, and the heat-insulating member peripheral edge portion engagement tool engagement portion 7b on a lower side of the heat-insulating member 2 is deformed in a shape extending longer than a diameter of the hole in a direction orthogonal to the heat-insulating member peripheral edge portion engagement tool shank 7a from the connection portion on the connection portion with the heat-insulating member peripheral edge portion engagement tool shank 7a. This is repeated, and the predetermined number of heat-insulating member peripheral edge portion engagement tools 7 are dispersively provided in the plane direction of the heat-insulating member 2, for integrating the heat-insulating members 2. As the heat-insulating member peripheral edge portion engagement tool 7, the same tool as the heat-insulating member engagement tool 5 described above is used, and the heat-insulating member peripheral edge portion engagement tool may be inserted into the heat-insulating members 12 by the same means as the heat-insulating member engagement tool 5.

In the embodiments described above, the plurality of engagement sheet pieces 13a are connected by the sheet connection portion 13b and the engagement sheet 13 is folded by the sheet connection portion 13b, but the engagement sheet 13 may not be divided and a line of folding may be drawn with scratch or hollow.

### Reference Signs List

1, 11: multilayer heat-insulating material
2, 12: heat-insulating member
2a, 12a: heat-insulating sheet
2b, 12b: spacer
3, 13: engagement sheet
4: mounting member
5, 5': heat-insulating member engagement tool
5a, 5a': shank
5b, 5c: engagement portion
6: suture
7: heat-insulating member peripheral edge portion engagement tool
7a: heat-insulating member peripheral edge portion engagement tool shank
7b, 7c: heat-insulating member peripheral edge portion engagement tool engagement portion
8: mounting member
9: mounting target
13a: engagement sheet piece
13b: sheet connection portion (folding portion)

## Claims

1. A multilayer heat-insulating material, comprising:
a heat-insulating member in which a heat-insulating sheet and a spacer are stacked;
an engagement sheet provided adjacent to the heat-insulating member;
a heat-insulating member engagement tool that penetrates the heat-insulating member and the engagement sheet and engages the heat-insulating member and the engagement sheet with each other; and
a mounting member that is provided on the engagement sheet and is detachable from a mounting target,
wherein the heat-insulating member engagement tool performs the engagement so that each layer of the heat-insulating member is not adhered to each other.

2. The multilayer heat-insulating material according to claim 1,
wherein the heat-insulating member engagement tool includes a shank that penetrates the heat-insulating member and the engagement sheet in a stacking direction, and one pair of engagement portions that is provided on both ends of the shank, and
a length of the shank is longer than a thickness thereof, in a case where the heat-insulating member and the engagement sheet are in contact with each other, in a state where a load is not applied in the stacking direction.

3. The multilayer heat-insulating material according to claim 1 or 2,
wherein the engagement sheet is a net-shaped or porous sheet.

4. The multilayer heat-insulating material according to any one of claims 1 to 3,
wherein the engagement sheet includes a folding portion capable of forming a folding line along a predetermined direction.

5. The multilayer heat-insulating material according to claim 4,
wherein the engagement sheet includes a plurality of engagement sheet pieces, and a sheet connection portion that connects the engagement sheet pieces to each other, and
the folding portion is formed by the sheet connection portion.

6. The multilayer heat-insulating material according to claim 5,
wherein the plurality of engagement sheet pieces have a shape corresponding to each surface of the mounting target.

## Amended claims

### Amended claims under Art. 19.1 PCT

1. (Amended) A multilayer heat-insulating material, comprising:
a heat-insulating member in which a heat-insulating sheet and a spacer are stacked;
an engagement sheet provided adjacent to the heat-insulating member;
a heat-insulating member engagement tool that penetrates the heat-insulating member and the engagement sheet and engages the heat-insulating member and the engagement sheet with each other; and
a mounting member that is provided on the engagement sheet and is detachable from a mounting target,
wherein the heat-insulating member engagement tool performs the engagement so that each layer of the heat-insulating member is not adhered to each other, and
the engagement sheet is formed of styrene, polyethylene, polypropylene, or polytetrafluoroethylene.

2. The multilayer heat-insulating material according to claim 1,
wherein the heat-insulating member engagement tool includes a shank that penetrates the heat-insulating member and the engagement sheet in a stacking direction, and one pair of engagement portions that is provided on both ends of the shank, and
a length of the shank is longer than a thickness thereof, in a case where the heat-insulating member and the engagement sheet are in contact with each other, in a state where a load is not applied in the stacking direction.

3. The multilayer heat-insulating material according to claim 1 or 2,
wherein the engagement sheet is a net-shaped or porous sheet.

4. The multilayer heat-insulating material according to any one of claims 1 to 3,
wherein the engagement sheet includes a folding portion capable of forming a folding line along a predetermined direction.

5. The multilayer heat-insulating material according to claim 4,
wherein the engagement sheet includes a plurality of engagement sheet pieces, and a sheet connection portion that connects the engagement sheet pieces to each other, and
the folding portion is formed by the sheet connection portion.

6. The multilayer heat-insulating material according to claim 5,
wherein the plurality of engagement sheet pieces have a shape corresponding to each surface of the mounting target.
